# EUROPEAN PATENT APPLICATION

(11) **EP 2 403 253 A2**
(43) Date of publication of application: **04.01.2012**
(21) Application number: 11005043.2
(22) Date of filing: 21.06.2011
(51) Int. Cl.: H04N 13/00

(54) **Displaying graphics with three dimensional video**

(30) Priority: 29.06.2010 US 359593 P; 21.01.2011 US 11089
(71) Applicant: Broadcom Corporation, Irvine, CA 92617 (US)
(72) Inventor: Demas, Jason, 92620 Irvine CA (US); Ikizyan, Ike, 92657 Newport Coast CA (US)
(74) Representative: Jehle, Volker Armin

(57) **Abstract**

Methods, systems, and apparatuses are provided for enabling three-dimensional video and additional graphics to be displayed together without interference. A media content signal is received. The media content signal includes graphics overlay data representative of a graphics overlay, first image data representative of a first image, and second image data representative of a second image. The first and second images are representative of three-dimensional content. An interference is detected between the graphics overlay and the three-dimensional content in a three-dimensional view volume. At least one of the graphics overlay data, the first image data, or the second image data is modified to cause the graphics overlay and the three-dimensional content to be non-interfering. The non-interfering graphics overlay and three-dimensional content are enabled to be viewed by a viewer based on the modified graphics overlay data, first image data, and/or second image data.

## Description

This application claims the benefit of U.S. Provisional Application No. 61/359,593, filed on June 29, 2010, which is incorporated by reference herein in its entirety.

### BACKGROUND OF THE INVENTION

### Field of the Invention

The present invention relates to three-dimensional display technology.

### Background Art

Images may be generated for display in various forms. For instance, television (TV) is a widely used telecommunication medium for transmitting and displaying images in monochromatic ("black and white") or color form. Conventionally, images are provided in analog form and are displayed by display devices in two-dimensions. More recently, images are being provided in digital form for display in two-dimensions on display devices having improved resolution (e.g., "high definition" or "HD"). Even more recently, images capable of being displayed in three-dimensions are being generated.

Conventional displays may use a variety of techniques to achieve three-dimensional image viewing functionality. For example, various types of glasses have been developed that may be worn by users to view three-dimensional images displayed by a conventional display. Examples of such glasses include glasses that utilize color filters or polarized filters. In each case, the lenses of the glasses pass two-dimensional images of differing perspective to the user's left and right eyes. The images are combined in the visual center of the brain of the user to be perceived as a three-dimensional image. In another example, synchronized left eye, right eye LCD (liquid crystal display) shutter glasses may be used with conventional two-dimensional displays to create a three-dimensional viewing illusion. In still another example, LCD display glasses are being used to display three-dimensional images to a user. The lenses of the LCD display glasses include corresponding displays that provide images of differing perspective to the user's eyes, to be perceived by the user as three-dimensional.

When three-dimensional video content is displayed using a display device, the user is enabled to view objects in the video content at various depths. Sometimes additional graphics may be rendered on the three-dimensional video content, such as closed captioning text, an interactive menu, a web page, a network logo, and/or other graphics. When the additional graphics is rendered on the three-dimensional video content, the result can be objectionable to the user if the additional graphics content interferes with the depth perception of the video content. Conventional techniques for avoiding such interference include displaying the three-dimensional video content as two-dimensional whenever such an overlay is performed, or avoiding graphics overlays altogether.

### BRIEF SUMMARY OF THE INVENTION

Methods, systems, and apparatuses are described for enabling three-dimensional video and additional graphics to be displayed together without interference substantially as shown in and/or described herein in connection with at least one of the figures, as set forth more completely in the claims.
According to an aspect of the invention, a display system is provided, comprising:
an interference detector that receives a media content signal, the media content signal including graphics overlay data representative of a graphics overlay, first image data representative of a first image, and second image data representative of a second image, the first and second images being representative of three-dimensional content, the interference detector configured to detect an interference between the graphics overlay and the three-dimensional content in a three-dimensional view volume;
a view modifier configured to modify at least one of the graphics overlay data, the first image data, or the second image data to cause the graphics overlay and the three-dimensional content to be non-interfering, the view modifier generating a modified media content signal that includes the modified at least one of the graphics overlay data, the first image data, or the second image data; and
a display device that receives the modified media content signal and is configured to enable the graphics overlay and the three-dimensional content to be viewed by a viewer as non-interfering.
Advantageously, the interference detector is configured to detect the interference by determining that the graphics overlay data is included in the media content signal, and estimating the interference based on predetermined information.
Advantageously, the view modifier includes a graphics overlay shifter configured to modify the graphics overlay data to shift a position of the graphics overlay in the three-dimensional view volume to be non-interfering with the three-dimensional content.
Advantageously, the view modifier includes a video compressor configured to modify the first image data and the second image data to compress the three-dimensional content in the three-dimensional view volume to be non-interfering with the graphics overlay.
Advantageously, the video compressor is configured to modify the first image data and the second image data to linearly compress the three-dimensional content.
Advantageously, the video compressor is configured to modify the first image data and the second image data to non-linearly compress the three-dimensional content.
Advantageously, the view modifier includes a video shifter configured to modify the first image data to shift the first image in a first direction and to modify the second image data to shift the second image in a second direction to shift a position of the three-dimensional content in the three-dimensional view volume to be non-interfering with the graphics overlay.
Advantageously, the video shifter being further configured to modify the first image data to scale the shifted first image and to modify the second image data to scale the shifted second image.
Advantageously, the view modifier includes a video scaler configured to modify the first image data to scale the first image and to modify the second image data to scale the second image to shift a position of the three-dimensional content in the three-dimensional view volume to be non-interfering with the graphics overlay.
Advantageously, the interference detector is configured to detect an overlap between the graphics overlay and the three-dimensional content in the three-dimensional view volume to detect the interference.
Advantageously, the interference detector is configured to determine that the three-dimensional content obstructs a view of the graphics overlay in the three-dimensional view volume to detect the interference.
According to an aspect, a method is provided, comprising:
receiving a media content signal, the media content signal including graphics overlay data representative of a graphics overlay, first image data representative of a first image, and second image data representative of a second image, the first and second images being representative of three-dimensional content;
detecting an interference between the graphics overlay and the three-dimensional content in a three-dimensional view volume;
modifying at least one of the graphics overlay data, the first image data, or the second image data to cause the graphics overlay and the three-dimensional content to be non-interfering; and
enabling the non-interfering graphics overlay and three-dimensional content to be viewed by a viewer based on the modified at least one of the graphics overlay data, the first image data, or the second image data.
Advantageously, said detecting comprises:
determining that the graphics overlay data is included in the media content signal; and
estimating the interference based on predetermined information.
Advantageously, said modifying comprises:
modifying the graphics overlay data to shift a position of the graphics overlay in the three-dimensional view volume to be non-interfering with the three-dimensional content.
Advantageously, said modifying comprises:
modifying the first image data and the second image data to compress the three-dimensional content in the three-dimensional view volume to be non-interfering with the graphics overlay.
Advantageously, the video compressor is configured to modify the first image data and the second image data to linearly compress the three-dimensional content.
Advantageously, the video compressor is configured to modify the first image data and the second image data to non-linearly compress the three-dimensional content.
Advantageously, said modifying comprises:
modifying the first image data to shift the first image in a first direction; and modifying the second image data to shift the second image in a second direction;
a position of the three-dimensional content thereby being shifted in the three-dimensional view volume to be non-interfering with the graphics overlay.
Advantageously, the method further comprises:
modifying the first image data to scale the shifted first image; and
modifying the second image data to scale the shifted second image.
Advantageously, said modifying comprises:
modifying the first image data to scale the first image; and
modifying the second image data to scale the second image;
a position of the three-dimensional content thereby being shifted in the three-dimensional view volume to be non-interfering with the graphics overlay.

### BRIEF DESCRIPTION OF THE DRAWINGS/FIGURES

The accompanying drawings, which are incorporated herein and form a part of the specification, illustrate the present invention and, together with the description, further serve to explain the principles of the invention and to enable a person skilled in the pertinent art to make and use the invention.

FIG. 1 shows a block diagram of a display environment, according to an example embodiment.

FIGS. 2 and 3 each show a viewer looking at stereoscopic pairs of images on a two-dimensional display.

FIG. 4 shows a viewer that is viewing a non-overlapping three-dimensional content and graphics overlay displayed by a display device.

FIG. 5 shows a viewer that is viewing an overlapping three-dimensional content and graphics overlay displayed by a display device.

FIG. 6A shows a block diagram of a display system, according to an example embodiment.

FIG. 6B shows a block diagram of example media content signal data, according to an embodiment.

FIG. 7 shows a flowchart for detecting and remediating an overlap between three-dimensional video content and a graphics overlay, according to an example embodiment.

FIG. 8 shows a block diagram of a view modifier, according to an example embodiment.

FIG. 9 shows a process for shifting a position of a graphics overlay in a three-dimensional view volume to be non-interfering with three-dimensional content, according to an example embodiment.

FIG. 10 shows a process for compressing three-dimensional content in a three-dimensional view volume to be non-interfering with a graphics overlay, according to an example embodiment.

FIG. 11 shows left side and right side images that are being shifted to modify a perceived distance from a viewer of corresponding displayed three-dimensional context, according to an example embodiment.

FIG. 12 shows a process for shifting right and left images corresponding to three-dimensional video so that the three-dimensional video does not interfere with a graphics overlay, according to an example embodiment.

FIG. 13 shows left side and right side images that are being scaled to modify a perceived distance from a viewer of corresponding displayed three-dimensional context, according to an example embodiment.

FIG. 14 shows a process for scaling right and left images corresponding to a three-dimensional video so that the three-dimensional video does not interfere with a graphics overlay, according to an example embodiment.

The present invention will now be described with reference to the accompanying drawings. In the drawings, like reference numbers indicate identical or functionally similar elements. Additionally, the left-most digit(s) of a reference number identifies the drawing in which the reference number first appears.

### DETAILED DESCRIPTION OF THE INVENTION

### Introduction

The present specification discloses one or more embodiments that incorporate the features of the invention. The disclosed embodiment(s) merely exemplify the invention. The scope of the invention is not limited to the disclosed embodiment(s). The invention is defined by the claims appended hereto.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

Furthermore, it should be understood that spatial descriptions (e.g., "above," "below," "up," "left," "right," "down," "top," "bottom," "vertical," "horizontal," etc.) used herein are for purposes of illustration only, and that practical implementations of the structures described herein can be spatially arranged in any orientation or manner.

### Example Embodiments

There is a huge industry push to support the display to viewers of three-dimensional images by a digital television (DTV) or by other types of display devices. Such display devices may be supported by user-worn glasses to enable the three-dimensional content to be viewed. Examples of such glasses include glasses that utilize color filters or polarized filters. In each case, the lenses of the glasses pass two-dimensional images of differing perspective to the user's left and right eyes. The images are combined in the visual center of the brain of the user to be perceived as a three-dimensional image. In another example, synchronized left eye, right eye LCD (liquid crystal display) shutter glasses may be used with conventional two-dimensional displays to create a three-dimensional viewing illusion. In such shutter glasses, a left image is displayed on the screen that is coordinated with a blackout on the right lens of the glasses (so that the left image is only seen by the left eye of the viewer), followed by a right image being displayed on the screen that is coordinated with a blackout on the left lens of the glasses (so that the right image is only seen by the right eye of the viewer). In still another example, LCD display glasses are being used to display three-dimensional images to a user. The lenses of the LCD display glasses include corresponding displays that provide images of differing perspective to the user's eyes, to be perceived by the user as three-dimensional. Furthermore, displays are being developed that do not require the user to wear eyewear to view three-dimensional images, such as displays that incorporate parallax barriers.

Video content displayed on a two-dimensional plane such that the left and right eye of the viewer are allowed to see the same content will be perceived as two-dimensional. As described above, for content to be perceived as three-dimensional, the left and right eyes of the viewer need to see different images which are a stereoscopic pair. The brain of the viewer combines the different images so that they are perceived together as a three-dimensional view.

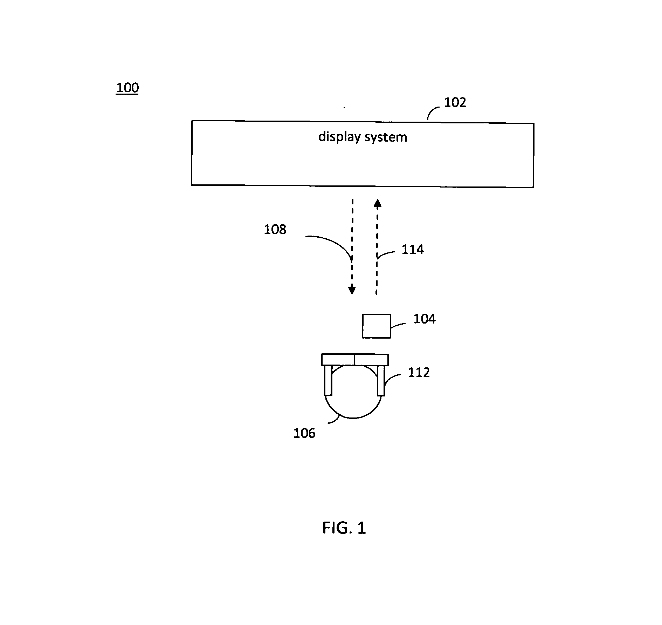

Display systems may be configured in various ways to display first and second images in a manner that the first and second images are perceived by a viewer as three-dimensional. For example, FIG. 1 shows a block diagram of a display environment 100, according to an embodiment. A viewer 106 is present in display environment 100 that is enabled to interact with a display system 102 to be delivered three-dimensional media content. As shown in FIG. 1, display environment 100 includes display system 102, a remote control 104, glasses 112, and viewer 106. Although a single viewer 106 is shown present in FIG. 1, in other embodiments, additional viewers 106 may be present in display environment 100 that may interact with display system 102 and may be delivered media content by display system 102.

Display system 102 is a system configured to display images. For example, display system 102 may include a display device, such as a television display, a computer monitor, a smart phone display, a video game display, etc., and may include one or more devices configured to receive and provide media content to the display device, such as a computer, a cable box or set top box, a game console, a digital video disc (DVD) player, a home theater receiver, etc. In an embodiment, the display device and a media content receiver and/or player may be integrated in a single device or may be separate devices. A display device of display system 102 emits light that includes images associated with three-dimensional content selected by viewer 106 for viewing. For example, viewer 106 may use remote control 104 (or may interact directly with a user interface of display system) to select three-dimensional content for viewing. As shown in FIG. 1, remote control 104 may transmit a content selection signal 114 that indicates content for viewing selected by viewer 106. Viewer 106 is delivered a corresponding view 108 by display system 102. View 108 may be a three dimensional view that includes three-dimensional video (e.g., a sequence of three-dimensional images).

Glasses 112 are optionally present. When present, glasses 112 may be polarized glasses, color filtering glasses, or shutter glasses, for example. As such, glasses 112 filter the images displayed by display system 102 so that viewer 106 is delivered a three-dimensional view associated with the three-dimensional content that viewer 106 selected.

For example, in an embodiment, display system 102 may emit light that includes first and second images associated with the first three-dimensional content selected by viewer 106. The first image is a left eye image and the second image is a right eye image associated with the first three-dimensional content. The first and second images may be simultaneously displayed or may be sequentially displayed by display system 102, with each repeated display of the first and second images providing a corresponding three-dimensional image. Glasses 112 operate to filter the first and second images displayed by display system 102 so that viewer 106 is enabled to view the corresponding three-dimensional content desired to be viewed. For example, if glasses 112 includes polarized or filtering lenses, the first and second images are simultaneously displayed by display system 102, and the left and right lenses each pass a respective one of the first and second images, and filter out the other of the first and second images. If glasses 112 include shutter lenses, the left and right shutter lenses of glasses 112 block or pass light in synchronization with the first and second images, respectively. In this manner, viewer 106 alternately sees the first image with his/her left eye and the second image with his/her right eye. The first and second images are combined in the visual center of the brain of viewer 106 to be perceived as a three-dimensional image.

Alternatively, a display device of display system 102 may be configured to display three-dimensional content in a manner such that viewer 106 does not have to wear glasses 112. In such a manner, the display device may have first and second sets of display elements (e.g., pixels) that simultaneously display the first and second images, respectively. The display device may include a light filter (e.g., a parallax barrier) to filter the light emitted by display system 102 so that the left eye of viewer 106 receives the first image, but not the second image, and the right eye of viewer 106 receives the second image, but not the first image.

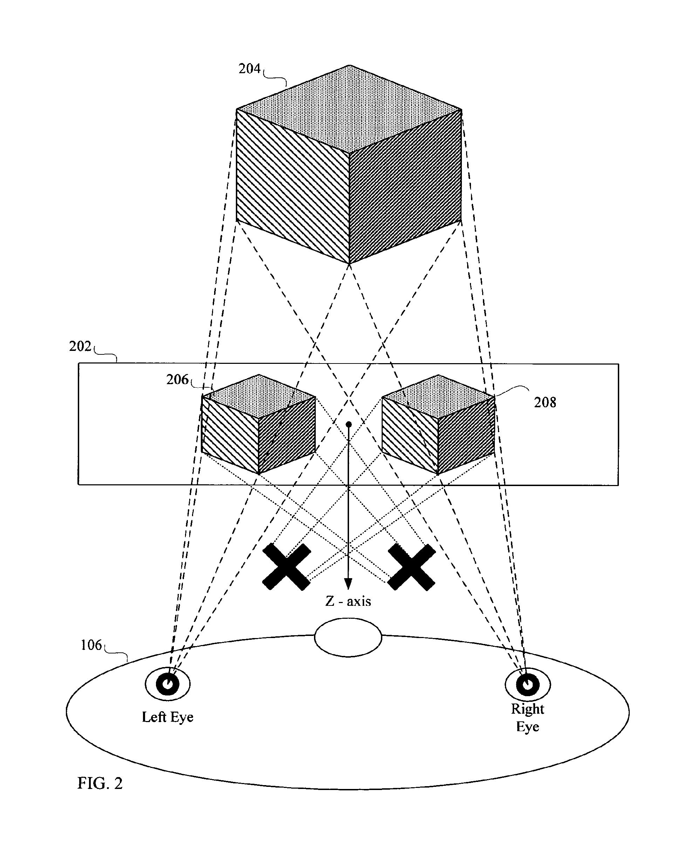

Accordingly, when three-dimensional video content is displayed using the display device of display system 102, the user sees objects at various depths. For instance, FIG. 2 shows a viewer 106 looking at a stereoscopic pair of images on a two-dimensional display 202. A display screen of display 202 displays a first image 206 on the left side of display 202 and a second image 208 on the right side of display 202. First and second images 206 and 208 are images of a cube from different perspectives. The left eye of viewer 106 is allowed to see first image 206 on the left side of display 202, but is blocked from seeing second image 208 (as indicated by the left "X" in FIG. 2), and the right eye of viewer 106 is allowed to see second image 208 on the right side of display 202, but is blocked from seeing first image 206 (as indicated by the right "X" in FIG. 2). As a result, viewer 106 perceives the cube as a three-dimensional object 204 that is located further from viewer 106 than display 202. Object 204 appears to be "behind" display 202.

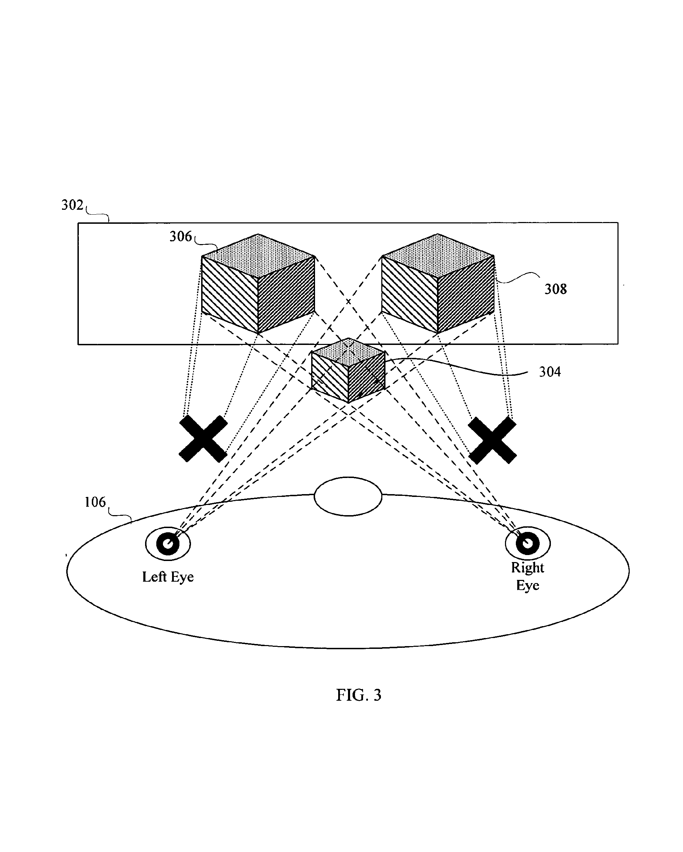

In another example, FIG. 3 shows a viewer 106 looking at a stereoscopic pair of images on a two-dimensional display 302. A display screen of display 302 displays a first image 306 on the left side of display 302 and a second image 308 on the right side of display 302. Similarly to FIG. 2, first and second images 306 and 308 are images of a cube from different perspectives. However, in FIG. 3, the left eye of viewer 106 is allowed to see second image 308 on the right side of display 302, but is blocked from seeing first image 306 (as indicated by the left "X" in FIG. 3), and the right eye of viewer 106 is allowed to see first image 306 on the left side of display 302, but is blocked from seeing second image 308 (as indicated by the right "X" in FIG. 3). As a result, viewer 106 perceives the cube as a three-dimensional object 304 that is located closer to viewer 106 than display 302 - object 304 appears to be "in front" of display 302.

Frequently, a display device may need to display information other than a primary video sequence to the viewer. In such case, additional graphics corresponding to the display information may be rendered on three-dimensional video content displayed by the display device. Examples of this display information include a graphical user interface (GUI), a web page, closed captioning, teletext, picture-in-picture (PIP), a network logo, and/or images or content rendered from other sources. If the primary video sequence is two-dimensional, this additional information can be rendered onto the video without an issue. However, if the primary video sequence is three-dimensional, the result can be objectionable if the additional information interferes with the depth perception of the video content.

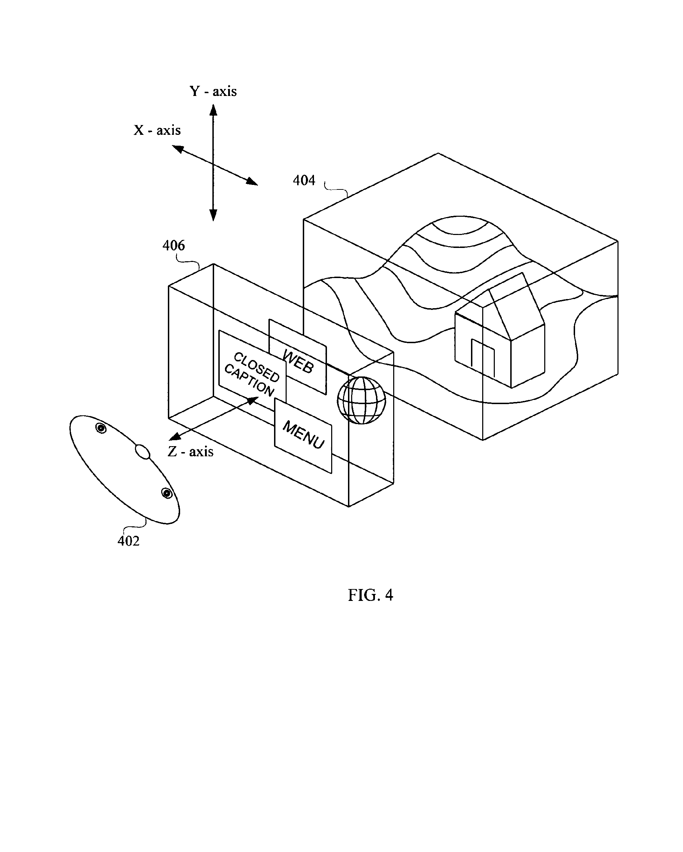

For instance, FIG. 4 shows a viewer 402 that is viewing three-dimensional content 404 and a graphics overlay 406 displayed by a display device, such as display system 102 of FIG. 1. Although viewer 402 is not shown in FIG. 4 wearing three-dimensional content view enabling glasses (e.g., glasses 112 of FIG. 1), viewer 402 may be wearing such glasses. FIG. 4 shows three-dimensional content 404 and graphics overlay 406 as they are perceived by viewer 402 in a three-dimensional space having a horizontal X-axis, a vertical Y-axis, and a depth Z-axis (an X-Y-Z space or view volume). The X- and Y-axes are perpendicular to each other and reside in a plane that is parallel to a plane of a display screen of the display device. The Z-axis is orthogonal to the plane of the X- and Y-axes, and is directed in and out of the display screen. In the example of FIG. 4, three-dimensional content 404 and graphics overlay 406 are non-overlapping. In other words, a volume that is filled by three-dimensional content 404 in the X-Y-Z space does not overlap with a plane (when graphics overlay 406 fills a two-dimensional space) or a volume (when graphics overlay 406 fills a three-dimensional space) filled by graphics overlay 406. Three-dimensional content 404 and graphics overlay 406 are positioned at different locations along the Z-axis such that graphics overlay 406 is perceived by viewer 402 as being located between viewer 402 and three-dimensional content 404. Because three-dimensional content 404 and graphics overlay 406 are positioned at different locations along the z-axis, and do not overlap, three-dimensional content 404 and graphics overlay 406 do not interfere with each other in the view of viewer 402.

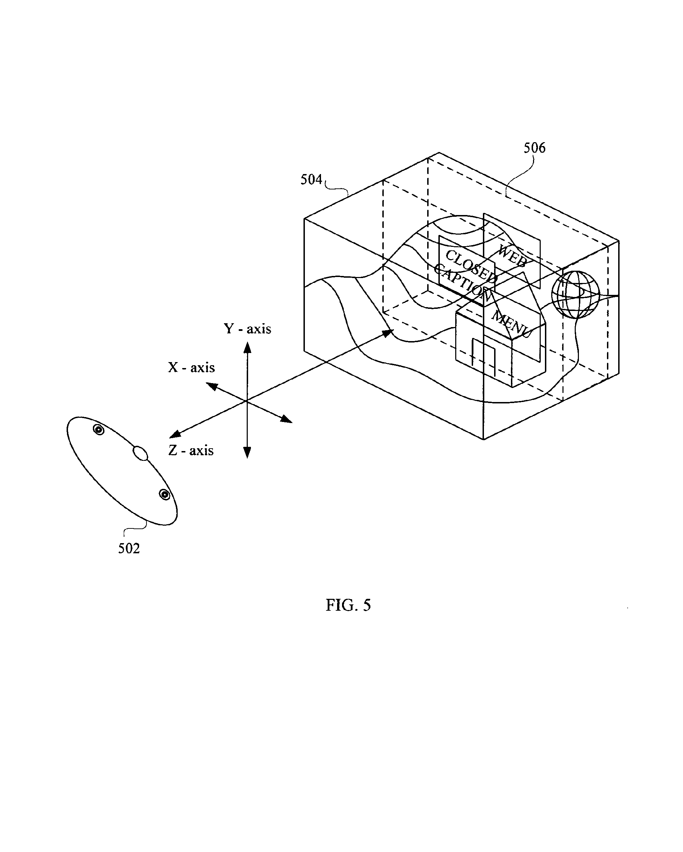

In contrast, FIG. 5 illustrates a situation where primary three-dimensional content and additional information interfere with each other. FIG. 5 shows a viewer 502 that is viewing three-dimensional content 504 and a graphics overlay 506 displayed by a display device, such as display system 102 of FIG. 1. Although viewer 502 is not shown in FIG. 5 wearing three-dimensional content view enabling glasses (e.g., glasses 112 of FIG. 1), viewer 502 may be wearing such glasses. FIG. 5 shows three-dimensional content 504 and graphics overlay 506 as they are perceived by viewer 502 in the three-dimensional X-Y-Z space. In the example of FIG. 5, three-dimensional content 504 and graphics overlay 506 are overlapping. In other words, a volume that is filled by three-dimensional content 504 in the X-Y-Z space overlaps with a plane (when graphics overlay 506 fills a two-dimensional space) or a volume (when graphics overlay 506 fills a three-dimensional space) filled by graphics overlay 506. Three-dimensional content 504 and graphics overlay 506 are positioned at overlapping locations along the Z-axis such that graphics overlay 506 is perceived by viewer 502 as being located within three-dimensional content 504. Because three-dimensional content 504 and graphics overlay 506 are positioned at overlapping locations along the Z-axis, and thus overlap, three-dimensional content 504 and graphics overlay 506 interfere with each other in the view of viewer 502. Such a circumstance may result in a visually unpleasant stereoscopic pairing and a suboptimal three-dimensional experience for viewer 502. For instance, viewer 502 may be unable to discern what graphics overlay 506 is in FIG. 5 (e.g., may be unable to read text, view a menu, etc., of graphics overlay 506). Thus, when additional graphics is rendered on three-dimensional content being rendered by a display device, the result can be objectionable to a viewer if the graphics content interferes with the depth perception of the video content.

Embodiments provided herein enable three-dimensional video and additional graphics to be displayed together without interference. In embodiments, spaces in which three-dimensional content and a graphics overlay are displayed may be detected (or estimated). If the spaces overlap, or if the three dimensional-video is between the viewer and the graphic overlay, the display device may be configured to modify the display of the three-dimensional content and/or graphics overlay so that they do not interfere with each other.

The perceived depth of objects in a three-dimensional video sequence (the position and/or length along the Z-axis) is related to the horizontal offset of any given object between the left and the right stereoscopic images. In one embodiment, by detecting the horizontal offset in the left and right images for each object or portion of a three-dimensional video sequence, a display system may detect the active region in the view volume where video content exists. The display system may use the detected active region to modify the video content and/or to modify the graphics overlay to avoid Z-axis interference and allow the graphics overlay to be rendered onto the three-dimensional video with no visual interference between the two. In an embodiment, if detection of horizontal offset is too complicated or complex for the processing capability of a particular display system, the active region in the view volume where video exists may instead be estimated based on any suitable predetermined information.

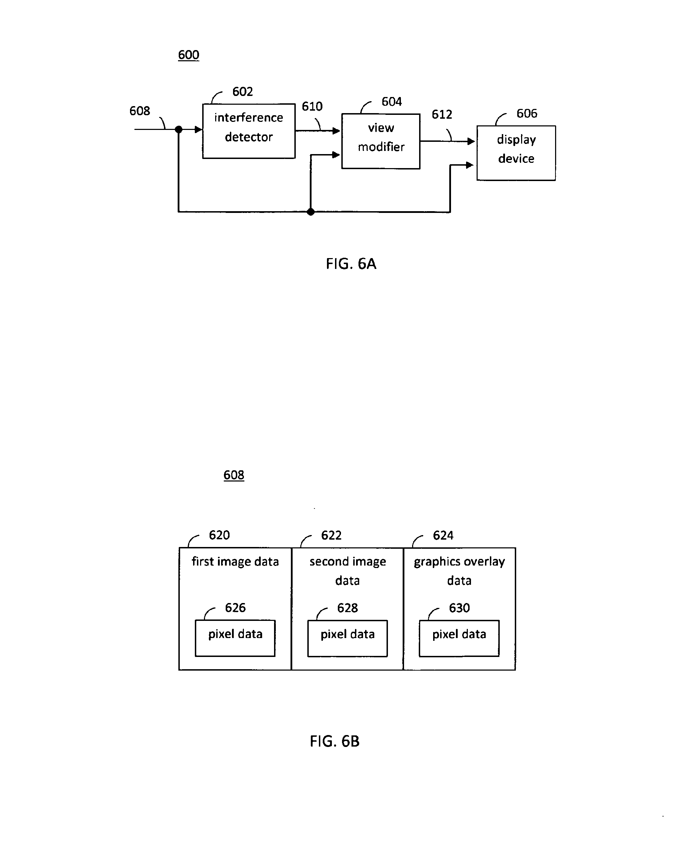

For instance, FIG. 6A shows a block diagram of a display system 600, according to an example embodiment. Display system 600 is an example of display system 100 of FIG. 1. Display system 600 is configured to detect an overlap between three-dimensional video content and a graphics overlay. As shown in FIG. 6A, display system 600 includes an interference detector 602, a view modifier 604, and a display device 606. Display system 600 is described as follows.

As shown in FIG. 6A, interference detector 602 receives media content signal 608. Media content signal 608 includes a stream of first image data corresponding to a stream of left images or frames and second image data corresponding to a stream of right images or frames. When the left and right images corresponding to the left and right image data are displayed by display device 606, a user may perceive display device 606 to be displaying three-dimensional video. Media content signal 608 may further include graphics overlay data corresponding to a graphics overlay (e.g., in the form of an image or a stream of images) to be overlaid on the three-dimensional video. Interference detector 602 is configured to determine whether the three-dimensional video and graphics overlay interfere with each other, similarly to three-dimensional content 504 and graphics overlay 506 in FIG. 5.

For instance, FIG. 6B shows a block diagram of example data that may be included in media content signal 608, according to an embodiment. As shown in FIG. 6B, media content signal 608 includes first image data 620, second image data 622, and graphics overlay data 624. First image data 620 is image data corresponding to one or more left images, second image data 622 is image data corresponding to one or more right images, and graphics overlay data 624 is image data corresponding to a graphics overlay, which may include one or more graphics overlay images. As shown in FIG. 6B, first image data 620 includes pixel data 626 that defines the contents (e.g., objects, colors, grayscale, etc.) of the first image, second image data 622 includes pixel data 628 that defines the contents of the second image, and graphics overlay data 624 includes pixel data 630 that defines the contents of the graphics overlay.

By analyzing the data received in media content signal 608, interference detector 602 may determine whether the three-dimensional video and graphics interfere with each other. For instance, interference detector 602 may determine that the three-dimensional video and graphics overlay interfere with each other if they are overlapping, and/or if the three-dimensional video obstructs the view of the graphics overlay by a viewer (e.g., the three-dimensional video is located between the graphics overlay and the viewer in the view volume). Interference detector 602 may be configured to detect whether the three-dimensional video and graphics overlay are interfering in any manner, including by estimation, or by determining a region of an actual overlap or actually determining that the three-dimensional video is between the viewer and graphics overlay.

For example, in one embodiment, interference detector 602 is configured to detect interference between the three-dimensional video and the graphics overlay by determining that graphics overlay data 624 is included in media content signal 608. Where graphics overlay data 624 is determined to be included in media content signal 608, interference detector 602 may be configured to assume and indicate that an interference exists (e.g., overlap and/or obstruction) by default. In such case, interference detector 602 may be configured to estimate the interference based on predetermined information. For example, interference detector 602 may assume that the graphics overlay is positioned at the Z=0 position on the Z-axis based on the Z=0 position being a common location for a graphics overlay, and may assume that the three-dimensional video is positioned in a space that includes the Z=0 plane. Interference detector 602 may therefore estimate an overlap to be present in the Z=0 plane. In other embodiments, interference detector 602 may estimate the interference based on any other predetermined information.

In another embodiment, interference detector 602 may analyze first image data 620 and second image data 622 to determine a space filled by each object that is present in the three-dimensional video. For example, in an embodiment, interference detector 602 may analyze pixel data 626 of first image data 620 and pixel data 628 of second image data 622 to determine one or more objects shown in the three-dimensional video. For instance, interference detector 602 may apply techniques of image recognition to pixel data 626 and 628, as would be known to persons skilled in the relevant art(s), to detect one or more objects in the three-dimensional video. Furthermore, by detecting a horizontal offset in the left and right images for each object, the active space in the three-dimensional video view volume for each object may be determined. A complete space occupied by the three-dimensional video may be determined by a combination of the active spaces determined for all objects present in the three-dimensional video.

If the graphics overlay is a two-dimensional graphics overlay, interference detector 602 may determine from graphics overlay data 624 received in media content signal 608 that the graphics overlay fills a planar space in the X-Y plane at Z=0 or at other Z coordinate If the graphics overlay is a three-dimensional graphics overlay, interference detector 602 may analyze left and right image data included in graphics overlay data 624 received in media content signal 608 to determine a space filled by the three-dimensional graphics overlay. For example, interference detector 602 may analyze pixel data 630 of graphics overlay data 624 to detect a planar or three-dimensional space filled by the graphics overlay.

Interference detector 602 may then perform a comparison of the space determined to be occupied by the three-dimensional video with the space determined to be filled by the graphics overlay. If interference is detected by the comparison, interference detector 602 may generate a detected interference signal 610 that indicates the detected interference, such as a detected overlap. For example, the detected overlap may be indicated in the form of one or more Z-axis coordinates at which an overlap exists (to indicate a depth at which the overlap exists), and may optionally indicate corresponding coordinates along the X- and Y-axes to indicate a volume of the detected overlap.

As shown in FIG. 6A, view modifier 604 receives detected interference signal 610 and media content signal 608. If detected interference signal 610 indicates that an interference is present between the three-dimensional video and the graphics overlay, view modifier 604 is configured to modify first image data 620, second image data 622, and/or graphics overlay data 624 to modify at least one of the three-dimensional video or the graphics overlay present in media content signal 608 to remove the interference. As described below, view modifier 604 may perform the modification in various ways. View modifier 612 generates a modified media content signal 612 that includes the three-dimensional video and graphics overlay as modified to remove the interference.

Display device 606 may receive media content signal 608 and/or modified media content signal 612. If modified media content signal 612 includes the modified form of the three-dimensional video and graphics overlay, display device 606 displays the modified form of the three-dimensional video and graphics overlay. If modified media content signal 612 is not present, display device displays the three-dimensional video and graphics overlay received in media content signal 608.

Display device 606 may be a television display, a computer monitor, a smart phone display, or other type of display. Display device 606 may alternately display right and left images that are filtered by glasses worn by a viewer to be perceived as a three-dimensional image. Alternatively, display device 606 may simultaneously display the right and left images in a manner such that a viewer perceives them as a three-dimensional image (e.g., using filtering glasses, by filtering due to a parallax barrier, etc.).

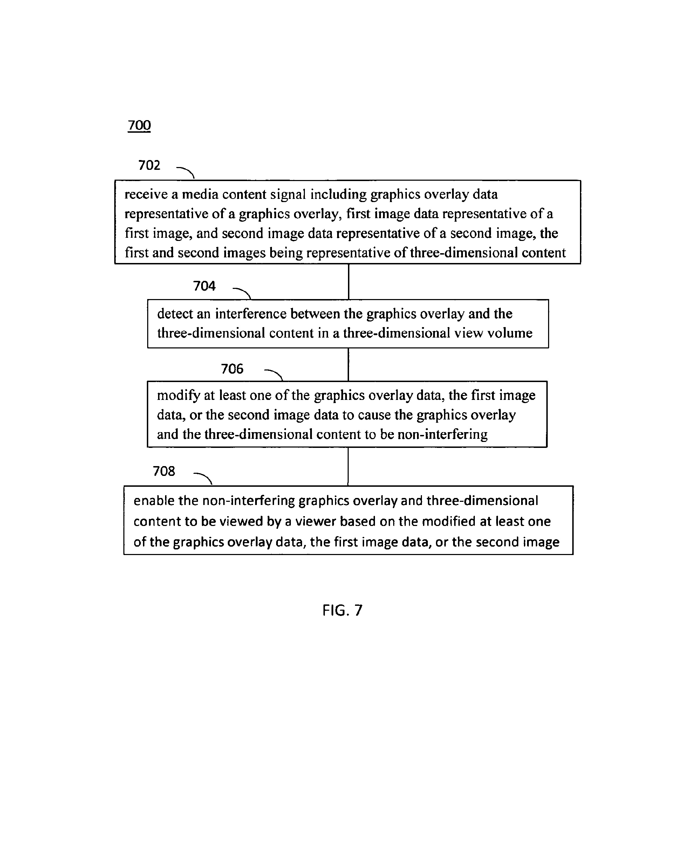

Accordingly, as described above, display system 600 is configured to detect and remediate an overlap between three-dimensional video content and a graphics overlay. Display system 600 is provided as an example embodiment, and is not intended to be limiting. Detecting and resolving an overlap between three-dimensional video content and a graphics overlay may be performed by alternative systems, in embodiments. For instance, FIG. 7 shows a flowchart 700 for detecting an overlap between three-dimensional video content and a graphics overlay, according to an example embodiment. Display system 600 may operate according to flowchart 700, in an embodiment. Further structural and operational embodiments will be apparent to persons skilled in the relevant art(s) based on the following description of flowchart 700. Flowchart 700 is described as follows.

Flowchart 700 begins with step 702. In step 702, a media content signal is received that includes graphics overlay data representative of a graphics overlay, first image data representative of a first image, and second image data representative of a second image, the first and second images being representative of three-dimensional content. For example, as shown in FIG. 6A, interference detector 602 receives media content signal 608. Media content signal 608 includes a stream of first image data 620 corresponding to a stream of left images or frames and second image data 622 corresponding to a stream of right images or frames. Furthermore, media content signal 608 includes graphics overlay data 624 corresponding to a graphics overlay.

In step 704, an interference is detected between the graphics overlay and the three-dimensional content in a three-dimensional view volume. For instance, as described above, interference detector 602 may determine whether the three-dimensional video and graphics overlay received in media content signal 608 interfere with each other. Interference detector 602 generates a detected interference signal 610 that indicates the interference.

In step 706, at least one of the graphics overlay data, the first image data, or the second image data is modified to cause the graphics overlay and the three-dimensional content to be non-interfering. For instance, as shown in FIG. 6A, view modifier 604 receives detected interference signal 610 and media content signal 608. If detected interference signal 610 indicates that an interference is present between the three-dimensional video and the graphics overlay, view modifier 604 is configured to modify first image data 620, second image data 622, and/or graphics overlay data 624 to modify at least one of the three-dimensional video or the graphics overlay present in media content signal 608 to remove the interference. View modifier 604 may modify first image data 620, second image data, and/or graphics overlay data 624 in various ways to cause the graphics overlay and the three-dimensional content to be non-interfering, such as described below. As shown in FIG. 6A, view modifier 604 generates modified media content signal 612, which includes the first image data, second image data, and graphics overlay data as modified to remove the interference.

In step 708, the non-interfering graphics overlay and three-dimensional content are enabled to be viewed by a viewer based on the modified at least one of the graphics overlay data, the first image data, or the second image data. For instance, as shown in FIG. 6A, display device 606 may receive modified media content signal 612. If modified media content signal 612 includes the modified form of the three-dimensional video and graphics overlay, display device 606 displays the modified form of the three-dimensional video and graphics overlay.

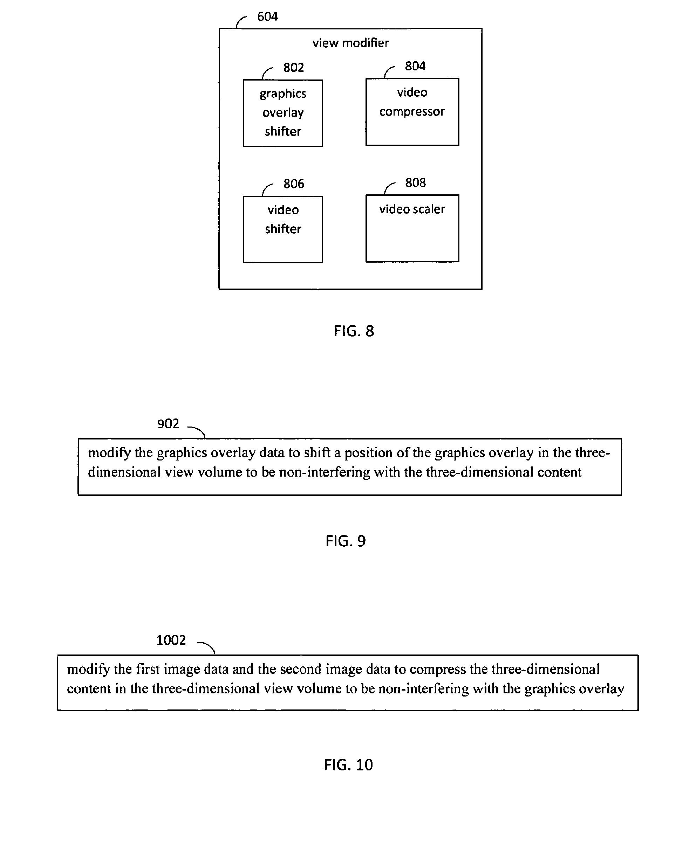

View modifier 604 may be configured to modify first image data 620, second image data 622, and/or graphics overlay data 624 to modify at least one of the three-dimensional video or the graphics overlay present in media content signal 608 to remove interference (e.g., in step 706 of FIG. 7) in various ways. For instance, FIG. 8 shows a block diagram of view modifier 604, according to an example embodiment. As shown in FIG. 8, view modifier 604 includes a graphics overlay shifter 802, a video compressor 804, a video shifter 806, and a video scaler 808. In embodiments, view modifier 604 may include any one or more of graphics overlay shifter 802, video compressor 804, video shifter 806, and video scaler 808. In this manner, video modifier 604 is enabled to perform one or more corresponding types of video modification. These elements of view modifier 604 are described as follows.

Graphics overlay shifter 802 is configured to shift a position of the graphics overlay relative to the three-dimensional video so that they do not interfere with each other. For example, referring to FIG. 5, where three-dimensional content 504 and graphics overlay 506 overlap, graphics overlay shifter 802 of FIG. 8 may be configured to shift a position of graphics overlay 506 so that graphics overlay 506 does not overlap with three-dimensional content 504. If three-dimensional content 504 and graphics overlay 506 did not overlap, but three-dimensional content 504 obstructed a view of graphics overlay 506, graphics overlay shifter 506 may be configured to shift a position of graphics overlay 506 to be between the viewer and three-dimensional content 504. Graphics overlay shifter 802 may be configured to shift graphics overlay 506 along the X-axis, Y-axis, Z-axis, or any combination of the X-, Y-, and X-axes by any distance to cause three-dimensional content 504 and graphics overlay 506 to not interfere.

For instance, in an embodiment, graphics overlay shifter 802 may be configured to move graphics overlay 506 to a region along the Z-axis where three-dimensional content 504 is not present. In such case, graphics overlay 506 may be moved by graphics overlay shifter 802 to be perceived to be closer to viewer 502 (e.g., similarly to graphics overlay 406 in FIG. 4) or to be perceived to be farther away from viewer 502 (although in such case, viewer 502 would have to look through three-dimensional content 504 to see graphics overlay 506, which may be undesirable).

When graphics overlay 506 is configured to be displayed at the origin along the Z-axis (Z=0), the same graphics overlay image is displayed to both eyes of viewer 502 by display device 606. When graphics overlay 506 is shifted by graphics overlay shifter 802 from Z=0 to be perceived to be closer to viewer 502, graphics overlay shifter 802 may be configured to generate first and second images from graphics overlay data 624 as left and right stereoscopic images corresponding to graphics overlay 506 that include horizontal offset relative to each other. Alternatively, the first and second images that are left and right stereoscopic images corresponding to graphics overlay 506 may be received in media content signal 608 in graphics overlay data 624 in addition to the Z=0 image information for graphics overlay 506 for the event that graphics overlay 506 needs to be shifted along the Z-axis (as indicated by interference detector 602).

As such, in an embodiment, during step 706 of flowchart 700, graphics overlay shifter 802 may be configured to perform a step 902 shown in FIG. 9. In step 902, the graphics overlay data is modified to shift a position of the graphics overlay in the three-dimensional view volume to be non-interfering with the three-dimensional content. As described above, graphics overlay shifter 802 is capable of moving graphics overlay 506 to a region along the Z-axis where three-dimensional content 504 is not present by modifying graphics overlay data 624 corresponding to graphics overlay 506.

In another embodiment, video compressor 804 is configured to modify the right and left image data to compress the three-dimensional video so that it does not interfere with graphics overlay 506. For example, referring to FIG. 5, where three-dimensional content 504 and graphics overlay 506 overlap, video compressor 804 may be configured to modify first and second image data 620 and 622 to compress three-dimensional content 504 along the Z-axis (e.g., to "squash" three-dimensional content 504) to fill the space bounded by the rear-most plane of three-dimensional content 504 shown in FIG. 5 and the rear-most plane of graphics overlay 506 shown in FIG. 5. Video compressor 804 may be configured to compress three-dimensional content 504 by any amount so that three-dimensional content 504 is visually behind and does not interfere with graphics overlay 506. Video compressor 804 may be configured to compress three-dimensional content 504 in any manner.

In one embodiment, video compressor 804 may be configured to compress three-dimensional content 504 in a linear manner. In such an embodiment, video compressor 804 may modify right and left image data 620 and 622 to uniformly compress three-dimensional content 504 according to a scalar compression factor (e.g., a compression factor of 3 is configured to divide a length of three-dimensional content 504 along the Z-axis by 3). In another embodiment, video compressor 804 may be configured to compress three-dimensional content 504 in a non-linear manner. In such an embodiment, video compressor 804 may modify right and left image data 620 and 624 to compress different portions of three-dimensional content 504 along the Z-axis by different amounts.

In an embodiment, video compressor 804 may be configured to compress the entirety of three-dimensional content 504 along the Z-axis in a linear or non-linear manner. In another embodiment, video compressor 804 may be configured to compress a portion of three-dimensional content 504 along the Z-axis in a linear or non-linear manner. For example, video compressor 804 may be configured to compress the portion of three-dimensional content 504 that interferes with graphics overlay 506, such as when graphics overlay 506 has an area in the X-Y plane that is less than an area of three-dimensional content 504 in the X-Y plane.

As such, in an embodiment, during step 706 of flowchart 700, video compressor 804 may be configured to perform a step 1002 shown in FIG. 10. In step 1002, the first image data and the second image data are modified to compress the three-dimensional content in the three-dimensional view volume to be non-interfering with the graphics overlay. As described above, video compressor 804 is configured to modify right and left image data 620 and 622 to compress the three-dimensional content so that it does not interfere with graphics overlay 506.

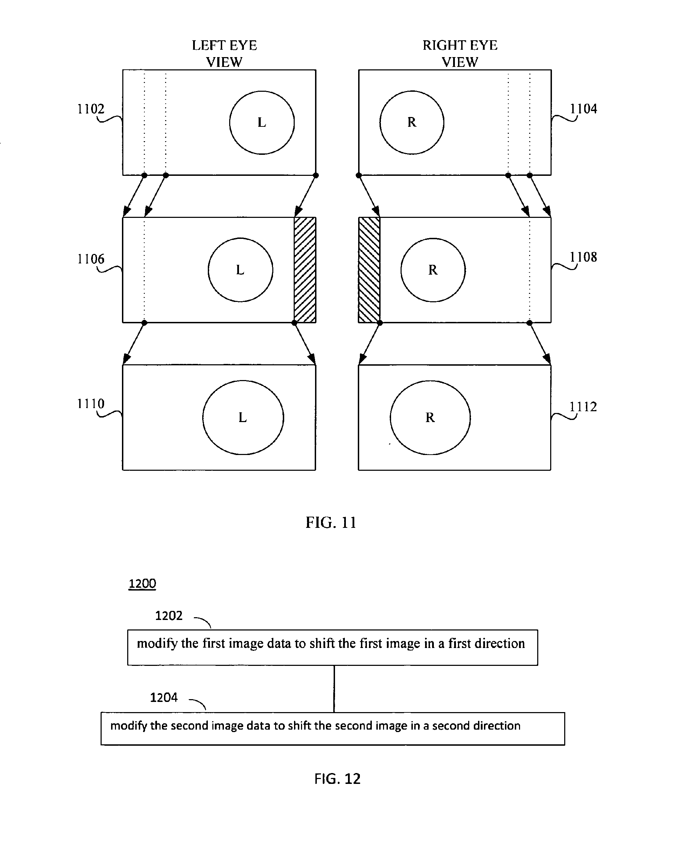

In another embodiment, video shifter 806 is configured to modify the right and left image data to shift the right and left images corresponding to the three-dimensional video so that the three-dimensional video does not interfere with graphics overlay 506. Logically, the depth of three-dimensional video content can be modified by increasing/decreasing the relative horizontal distance between the left and right stereoscopic images. For instance, FIG. 11 shows left side and right side images as they are being shifted to modify a perceived distance from a viewer of corresponding displayed three-dimensional context, according to an example embodiment. In the example of FIG. 11, the left image is shifted to the left and the right image is shifted to the right to provide the viewer with the perception of the three-dimensional content being moved to an increased distance from the viewer. Depending on the active location of the three-dimensional video along the Z-axis, this shift can be used to avoid collision with a graphics overlay.

Initial left and right images 1102 and 1104 are shown in FIG. 11 that respectively include right and left side perspective views of an object (shown as a circle in FIG. 11). Shifted left and right images 1106 and 1108 are shown in FIG. 11 that may be generated by video shifter 806 by shifting pixel data of first and second image data 620 and 622, respectively, and are respectively left- and right-shifted versions of initial left and right images 1102 and 1108. As shown in FIG. 11, shifted left and right images 1106 and 1108 each include the object, with the object being left shifted in shifted left image 1106 and being right shifted in shifted right image 1108. Furthermore, a left most portion of shifted left image 1106 is shifted out and removed from shifted left image 1106, and a new portion is added to shifted left image 1106 (is shifted in from the right side) as a right most portion of shifted left image 1106. A right most portion of shifted right image 1108 is shifted out and removed (cropped) from shifted right image 1108, and a new portion is added to shifted right image 1108 (is shifted in from the left side) as a left most portion of shifted right image 1108. Such image portions may be removed by removing corresponding columns of pixels from first and second image data 620 and 624. New shifted-in portions may be added by adding corresponding columns of pixels to first and second image data 620 and 624. The new shifted-in portions may be white, black, a solid color, or a pattern, including a pattern generated based on the contents of initial left and right images 1102 and 1108. Shifted left and right images 1106 and 1108 may be displayed by display device 606 (based on modified right and left image data) so that the three-dimensional content appears to be moved to a further distance away from the viewer relative to initial left and right images 1102 and 1104.

In an embodiment, shifted left and right images 1106 and 1108 may optionally be further processed by video shifter 806 (or by video scaler 808). For example, the modified right and left image data corresponding to shifted left and right images 1106 and 1108 may be modified to scale both of shifted left and right images 1106 and 1108 to correct for the new portions (e.g., black bars) added by video shifter 806 during the shifting process. For instance, FIG. 11 shows scaled shifted left and right images 1110 and 1112, which are scaled (e.g., enlarged) versions of shifted left and right images 1106 and 1108. By scaling shifted left and right images 1106 and 1108 to be larger, the new portions may be removed. Scaled shifted left and right images 1110 and 1112 may be scaled relative to shifted left and right images 1106 and 1108 in any manner, including being enlarged in width (e.g., stretched along the X-axis) or enlarged in both height and width (stretched along the X- and Y-axes), by modifying pixel data of first and second image data 620 and 624 accordingly. In such case, the object in scaled shifted left and right images 1110 and 1112 is enlarged relative to shifted left and right images 1106 and 1108.

In another embodiment, the three-dimensional content can be shifted in the opposite directions than shown in FIG. 11 (e.g., moving the left image to the right and the right image to the left) to move the three-dimensional content towards the viewer on the Z-axis if desired for avoidance of a graphical overlay.

As such, in an embodiment, during step 706 of flowchart 700, video shifter 806 may be configured to perform a flowchart 1200 shown in FIG. 12. In step 1202 of flowchart 1200, the first image data is modified to shift the first image in a first direction. In step 1204, the second image data is modified to shift the second image in a second direction. As described above, video shifter 806 is configured to modify right and left image data 620 and 622 to shift right and left images corresponding to the three-dimensional video so that the three-dimensional video does not interfere with graphics overlay 506.

In another embodiment, video scaler 808 is configured to modify the right and left image data to scale the right and left images corresponding to the three-dimensional video so that the three-dimensional video does not interfere with graphics overlay 506. Logically, the depth of three-dimensional video content can be modified by increasing/decreasing the relative horizontal distance between the left and right stereoscopic images.

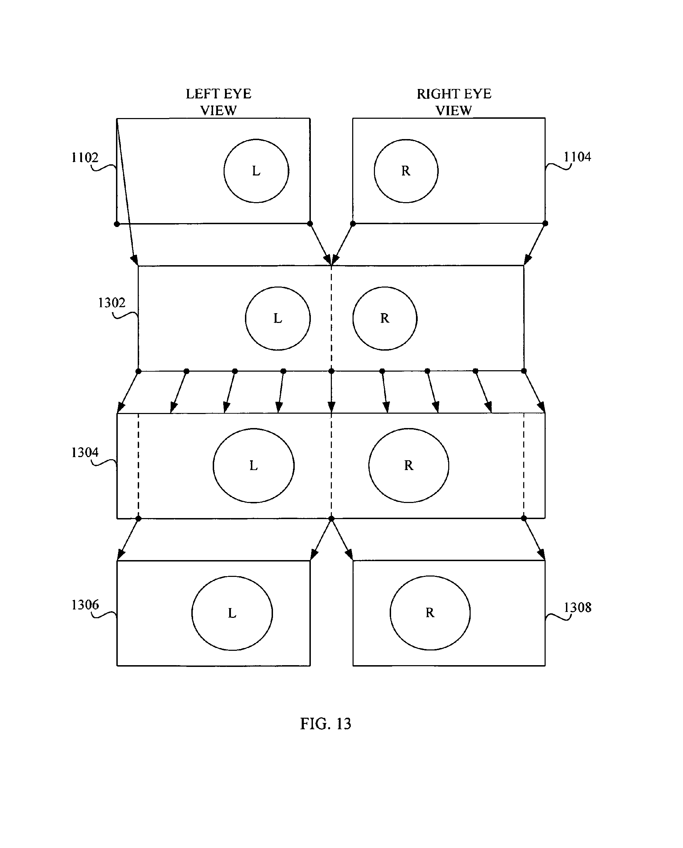

For instance, FIG. 13 shows left side and right side images 1102 and 1104 that are being scaled up by video scaler 808 to modify a perceived distance from a viewer of corresponding displayed three-dimensional context, according to an example embodiment. As shown in FIG. 13, left side and right side images 1102 and 1104 are logically positioned side by side to form a single elongated image 1302. Elongated image 1302 is scaled up by video scaler 808 to form a larger size elongated image 1304. For instance, as shown in FIG. 13, elongated image 1302 may be lengthened (e.g., stretched) along the X-axis by video scaler 808 to form larger size elongated image 1304. For example, techniques of pixel interpolation may be performed on pixel data 626 and 628 of first and second image data 620 and 622 to elongate image 1302. As such, the object present in left side and right side images 1102 and 1104, and thus present in the left and right sides of elongated image 1302, is lengthened along the X-axis in both the left and right sides of larger size elongated image 1304 (e.g., stretched from circular shape to elliptical shape). The outer left and right portions of larger size-elongated image 1304 are cropped by video scaler 808 (by the amount of the additional length of larger size elongated image 1304 relative to elongated image 1302), and the cropped version of larger size-elongated image 1304 is divided in half by video scaler 808 to form scaled left and right side images 1306 and 1308. Scaled left and right side images 1306 and 1308 may be displayed by display device 606. As a result, scaled left and right side images 1306 and 1308 have a same size as left side and right side images 1102 and 1104, but include a relative increase in the offset between them. As such, a perception of the three-dimensional content included in scaled left and right side images 1306 and 1308 is perceived by the viewer as being moved further away from the viewer along the Z-axis relative to three-dimensional content corresponding to left side and right side images 1102 and 1104.

In a similar manner, video scaler 808 may scale down left side and right side images 1102 and 1104 (e.g., compressing left side and right side images 1102 and 1104 along the X-axis), with the resulting three-dimensional content being moved towards the user on the Z-axis. For example, techniques of pixel subsampling or downsampling may be performed on pixel data 626 and 628 of first and second image data 620 and 622 to compress image 1302 horizontally (and pixel columns may be optionally added).

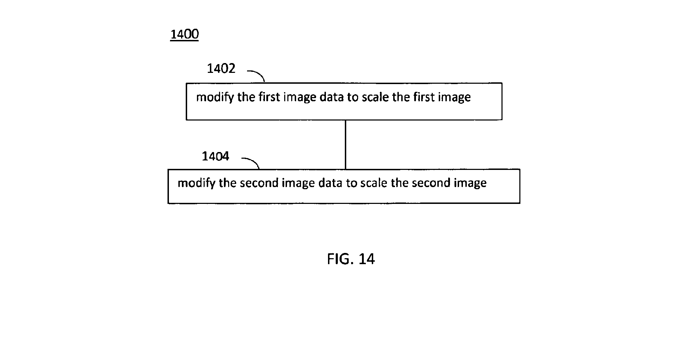

As such, in an embodiment, during step 706 of flowchart 700, video scaler 808 may be configured to perform a flowchart 1400 shown in FIG. 14. In step 1402 of flowchart 1400, the first image data is modified to scale the first image. In step 1404, the second image data is modified to scale the second image. As described above, video scaler 808 is capable of modifying right and left image data 620 and 622 to scale right and left images corresponding to a three-dimensional video so that the three-dimensional video does not interfere with graphics overlay 506.

Accordingly, in embodiments, the graphics overlay may be shifted, the three-dimensional content may be compressed, the three-dimensional content may be shifted, and/or the three-dimensional content may be scaled by video modifier 604 (FIG. 6A) to remove interference between the graphics overlay and the three-dimensional content. View modifier 604 generates a modified media content signal 612 that includes the three-dimensional content and graphics overlay modified (e.g., includes modified forms of one or more of first image data 620, second image data 622, and/or graphics overlay data 624) in any one or more of these manners to remove the interference. Display device 606 displays the modified form of the three-dimensional content and graphics overlay, and the viewer is enabled to view the graphics overlay and three-dimensional content such that the graphics overlay and three-dimensional content are perceived by the viewer to not interfere. In this manner, the viewer is enabled to more clearly view the graphics overlay and/or three-dimensional content.

### Conclusion

While various embodiments of the present invention have been described above, it should be understood that they have been presented by way of example only, and not limitation. It will be apparent to persons skilled in the relevant art that various changes in form and detail can be made therein without departing from the spirit and scope of the invention. Thus, the breadth and scope of the present invention should not be limited by any of the above-described exemplary embodiments, but should be defined only in accordance with the following claims and their equivalents.

## Claims

1. A display system, comprising:
an interference detector that receives a media content signal, the media content signal including graphics overlay data representative of a graphics overlay, first image data representative of a first image, and second image data representative of a second image, the first and second images being representative of three-dimensional content, the interference detector configured to detect an interference between the graphics overlay and the three-dimensional content in a three-dimensional view volume;
a view modifier configured to modify at least one of the graphics overlay data, the first image data, or the second image data to cause the graphics overlay and the three-dimensional content to be non-interfering, the view modifier generating a modified media content signal that includes the modified at least one of the graphics overlay data, the first image data, or the second image data; and
a display device that receives the modified media content signal and is configured to enable the graphics overlay and the three-dimensional content to be viewed by a viewer as non-interfering.

2. The display system of claim 1, wherein the interference detector is configured to detect the interference by determining that the graphics overlay data is included in the media content signal, and estimating the interference based on predetermined information.

3. The display system of claim 1, wherein the view modifier includes a graphics overlay shifter configured to modify the graphics overlay data to shift a position of the graphics overlay in the three-dimensional view volume to be non-interfering with the three-dimensional content.

4. The display system of claim 1, wherein the view modifier includes a video compressor configured to modify the first image data and the second image data to compress the three-dimensional content in the three-dimensional view volume to be non-interfering with the graphics overlay.

5. The display system of claim 4, wherein the video compressor is configured to modify the first image data and the second image data to linearly compress the three-dimensional content.

6. The display system of claim 4, wherein the video compressor is configured to modify the first image data and the second image data to non-linearly compress the three-dimensional content.

7. The display system of claim 1, wherein the view modifier includes a video shifter configured to modify the first image data to shift the first image in a first direction and to modify the second image data to shift the second image in a second direction to shift a position of the three-dimensional content in the three-dimensional view volume to be non-interfering with the graphics overlay.

8. The display system of claim 7, the video shifter being further configured to modify the first image data to scale the shifted first image and to modify the second image data to scale the shifted second image.

9. The display system of claim 1, wherein the view modifier includes a video scaler configured to modify the first image data to scale the first image and to modify the second image data to scale the second image to shift a position of the three-dimensional content in the three-dimensional view volume to be non-interfering with the graphics overlay.

10. The display system of claim 1, wherein the interference detector is configured to detect an overlap between the graphics overlay and the three-dimensional content in the three-dimensional view volume to detect the interference.

11. The display system of claim 1, wherein the interference detector is configured to determine that the three-dimensional content obstructs a view of the graphics overlay in the three-dimensional view volume to detect the interference.

12. A method, comprising:
receiving a media content signal, the media content signal including graphics overlay data representative of a graphics overlay, first image data representative of a first image, and second image data representative of a second image, the first and second images being representative of three-dimensional content;
detecting an interference between the graphics overlay and the three-dimensional content in a three-dimensional view volume;
modifying at least one of the graphics overlay data, the first image data, or the second image data to cause the graphics overlay and the three-dimensional content to be non-interfering; and
enabling the non-interfering graphics overlay and three-dimensional content to be viewed by a viewer based on the modified at least one of the graphics overlay data, the first image data, or the second image data.

13. The method of claim 12, wherein said detecting comprises:
determining that the graphics overlay data is included in the media content signal; and
estimating the interference based on predetermined information.

14. The method of claim 12, wherein said modifying comprises:
modifying the graphics overlay data to shift a position of the graphics overlay in the three-dimensional view volume to be non-interfering with the three-dimensional content.

15. The method of claim 12, wherein said modifying comprises:
modifying the first image data and the second image data to compress the three-dimensional content in the three-dimensional view volume to be non-interfering with the graphics overlay.
